# EUROPEAN PATENT SPECIFICATION

(11) **EP 4 390 690 B1**
(45) Date of publication and mention of the grant of the patent: **08.04.2026**
(21) Application number: 22882527.9
(22) Date of filing: 16.09.2022
(51) Int. Cl.: G06F 3/0484, G06F 9/54, G06F 8/61, G06F 3/0482, G06F 9/445, H04L 51/224, H04L 67/55

(54) **NOTIFICATION PROCESSING METHOD, CHIP, ELECTRONIC DEVICE, AND COMPUTER READABLE STORAGE MEDIUM**
BENACHRICHTIGUNGSVERARBEITUNGSVERFAHREN, CHIP, ELEKTRONISCHE VORRICHTUNG UND COMPUTERLESBARES SPEICHERMEDIUM
PROCÉDÉ DE TRAITEMENT DE NOTIFICATION, PUCE, DISPOSITIF ÉLECTRONIQUE ET SUPPORT DE STOCKAGE LISIBLE PAR ORDINATEUR

(30) Priority: 22.10.2021 CN 202111234298
(43) Date of publication of application: 26.06.2024
(60) Divisional application: 26156963.6
(73) Proprietor: Huawei Technologies Co., Ltd., Shenzhen, Guangdong 518129 (CN)
(72) Inventor: LIU, Wei, Shenzhen, Guangdong 518129 (CN); WANG, Jinglei, Shenzhen, Guangdong 518129 (CN); CHENG, Jing, Shenzhen, Guangdong 518129 (CN)
(74) Representative: Goddar, Heinz J.
(86) International application number: PCT/CN2022/119456
(87) International publication number: WO 2023/065916

(56) References cited:
- WO-A1-2005/116892
- CN-A- 104 601 674
- CN-A- 105 677 490
- CN-A- 111 404 802
- CN-A- 112 181 616
- CN-A- 114 741 213
- US-A1- 2017 289 087
- US-A1- 2023 297 414

## Description

### TECHNICAL FIELD

This application relates to the terminal field, and in particular, to a notification processing method, a chip, an electronic device, and a computer-readable storage medium.

### BACKGROUND

A notification is one of common features of a current mobile device or smart device. The notification is a capability of sending an instant message or a communication message by an application, and is mainly used to notify a user of information from the application. The notification may be displayed in a status bar in a form of an icon, or displayed in a form of a floating window. The user may pull down a notification bar to view detailed information about the notification, or tap the notification to redirect to the application, or the like.

Existing multi-device notification synchronization requires that each device is installed with an application for receiving and sending the notification. Notification interaction can be implemented only on a device on which the notification is displayed. For example, page redirection of the notification can be performed only on this device.

US 2017/289087 Al discloses notification delivery to devices without appropriate applications installed.

US 2023/297414 Al discloses a task processing method and a related apparatus.

### SUMMARY

The invention is set out in the appended set of claims. In view of this, it is necessary to provide a notification processing method, which can implement cross-device notification interaction and improve user experience.

A first aspect of embodiments of this application discloses a notification processing method, applied to a first electronic device, where the first electronic device displays a first notification. The notification processing method includes: The first electronic device obtains notification opening information of the first notification based on an operation of opening the first notification, where the notification opening information includes a device identifier and an application parameter of a first application corresponding to the first notification; and when the first electronic device determines, based on the device identifier, that a device for opening the first notification is a second electronic device, the first electronic device transfers the notification opening information to the second electronic device, so that the second electronic device starts, based on the application parameter, the first application to open the first notification, or downloads and installs the first application to open the first notification, wherein the operation of opening the first notification comprises a first user operation and a second user operation, and the notification processing method further comprises: enabling, by the first electronic device, a device selection control based on the first operation; and in response to the second operation, specifying, by the device selection control, a device identifier for opening the first notification.

According to this technical solution, for the first notification synchronously displayed on a plurality of devices, the first notification may be tapped on any device and a device for opening the first notification may be selected. In this way, the device specified by the user starts the first application to open the first notification. If the first application is not installed on the specified device, the first application may be silently downloaded and installed, or the first application may be further downloaded and installed according to a user download confirmation instruction. This implements a cross-device notification opening operation, and improves user experience.

According to this technical solution, the electronic device may enable the device selection control in response to the first operation of the user. For example, the user taps the first notification on the electronic device to display the device selection control. The device selection control may include identification information of a plurality of devices in a same local area network. The user may select, in the device selection control, a device for starting the first application to open the first notification. The device selection control may specify, in response to a device selection operation (the second operation) of the user, a device identifier for opening the first notification.

In some embodiments, the first electronic device includes a first data storage area, the second electronic device includes a second data storage area, the first data storage area and the second data storage area form a distributed database, and that the first electronic device transfers the notification opening information to the second electronic device includes: The first electronic device writes the notification opening information into the first data storage area, so that the second electronic device writes the notification opening information into the second data storage area based on a preset data synchronization policy.

According to this technical solution, data storage areas of the first electronic device and the second electronic device form the distributed database, so that data synchronization may be performed between the data storage area of the first electronic device and the data storage area of the second electronic device. In this way, the notification opening information of the first electronic device is transferred to the second electronic device, and the second electronic device may start the first application based on the application parameter in the notification opening information to open the first notification.

In some embodiments, the first electronic device includes a first distributed soft bus, the second electronic device includes a second distributed soft bus, the first data storage area and the second data storage area form the distributed database based on the first distributed soft bus and the second distributed soft bus. The preset data synchronization policy is defined in the distributed database.

According to this technical solution, the data synchronization between the data storage area of the first electronic device and the data storage area of the second electronic device is implemented through a distributed soft bus.

In some embodiments, the notification processing method further includes: When the first electronic device determines, based on the device identifier, that the device for opening the first notification is the first electronic device, the first electronic device starts, based on the application parameter, the first application to open the first notification, or downloads and installs the first application to open the first notification.

According to this technical solution, for the first notification synchronously displayed on the plurality of devices, the first notification may be further tapped on any device and this device may be selected to start the first application to open the first notification. If the first application is not installed on this device, the first application may be silently downloaded and installed, or the first application may be further downloaded and installed according to the user download confirmation instruction.

In some embodiments, the notification processing method further includes: The first electronic device transfers first notification opening information to the second electronic device, so that the second electronic device cancels displaying the first notification.

According to this technical solution, for the first notification synchronously displayed on the plurality of devices, when the first electronic device is specified as the device for opening the first notification, another electronic device may synchronously cancel, based on the first notification opening information transferred by the first electronic device, displaying the first notification.

In some embodiments, the first electronic device includes a first data storage area, the second electronic device includes a second data storage area, the first data storage area and the second data storage area form a distributed database, both the first data storage area and the second data storage area store information about the first notification, and that the first electronic device transfers first notification opening information to the second electronic device includes: The first electronic device sets a notification read status that is of the first notification and that is stored in the first data storage area to read, so that the second electronic device updates, based on a preset data synchronization policy, a notification read status that is of the first notification and that is stored in the second data storage area to read.

According to this technical solution, data storage areas of the first electronic device and the second electronic device form the distributed database, so that data synchronization may be performed between the data storage area of the first electronic device and the data storage area of the second electronic device. After the first electronic device opens the first notification, the first electronic device may set the notification read status of the first notification to read, and transfer the first notification opening information to the second electronic device, so that the second electronic device may synchronously update the first notification to read, and then the second electronic device may cancel displaying the first notification.

In some embodiments, when the notification read status that is of the first notification and that is stored in the second data storage area is updated to read, the second data storage area returns notification read information, so that the second electronic device cancels, based on the notification read information, displaying the first notification.

According to this technical solution, when the notification read status is updated in the second data storage area, the notification read information may be returned, so that the second electronic device cancels, based on the notification read information, displaying the first notification. For example, when detecting that the notification read status is updated, the second data storage area may perform notification status update callback and return the notification read information.

In some embodiments, the first electronic device includes a first data storage area, the second electronic device includes a second data storage area, the first data storage area and the second data storage area form a distributed database, both the first data storage area and the second data storage area store information about the first notification, and that the first electronic device transfers first notification opening information to the second electronic device includes: The first electronic device deletes the information that is about the first notification and that is stored in the first data storage area, so that the second electronic device deletes, based on a preset data synchronization policy, the information that is about the first notification and that is stored in the second data storage area.

According to this technical solution, data storage areas of the first electronic device and the second electronic device form the distributed database, so that data synchronization may be performed between the data storage area of the first electronic device and the data storage area of the second electronic device. After the first electronic device opens the first notification, the first electronic device may delete the information that is about the first notification and that is stored in the first data storage area, and transfer first notification deletion information to the second electronic device, so that the second electronic device may synchronously delete the information that is about the first notification and that is stored in the second data storage area, and then the second electronic device may cancel displaying the first notification.

In some embodiments, when the information about the first notification is deleted from the second data storage area, the second data storage area returns notification deletion information, so that the second electronic device cancels, based on the notification deletion information, displaying the first notification.

According to this technical solution, when the notification information is deleted from the second data storage area, the notification deletion information may be returned, so that the second electronic device cancels, based on the notification deletion information, displaying the first notification. For example, when detecting that the notification information is deleted, the second data storage area may perform notification deletion callback and return the notification deletion information.

According to this technical solution, for the first notification synchronously displayed on a plurality of devices, when the first electronic device cancels displaying the first notification, another electronic device may synchronously cancel, based on the cancellation information that is of the first notification and that is transferred by the first electronic device, displaying the first notification.

According to this technical solution, data storage areas of the first electronic device and the second electronic device form the distributed database, so that data synchronization may be performed between the data storage area of the first electronic device and the data storage area of the second electronic device. After the first electronic device opens the first notification, the first electronic device may set the notification read status of the first notification to read, and transfer the first notification opening information to the second electronic device, so that the second electronic device may synchronously update the first notification to read, and then the second electronic device may synchronously cancel displaying the first notification.

In some embodiments, the first electronic device includes a first data storage area, the second electronic device includes a second data storage area, the first data storage area and the second data storage area form a distributed database, both the first data storage area and the second data storage area store information about the first notification, and that the first electronic device transfers cancellation information of the first notification to the second electronic device includes: when the operation of canceling the first notification is a notification deletion operation, the first electronic device deletes the information that is about the first notification and that is stored in the first data storage area, so that the second electronic device deletes, based on a preset data synchronization policy, the information that is about the first notification and that is stored in the second data storage area.

According to this technical solution, data storage areas of the first electronic device and the second electronic device form the distributed database, so that data synchronization may be performed between the data storage area of the first electronic device and the data storage area of the second electronic device. After the first electronic device deletes the first notification, the first electronic device may delete the information that is about the first notification and that is stored in the first data storage area, and transfer notification deletion information to the second electronic device, so that the second electronic device may synchronously delete the information that is about the first notification and that is stored in the second data storage area, and then the second electronic device may cancel displaying the first notification.

In some embodiments, the first electronic device includes a first distributed soft bus, the second electronic device includes a second distributed soft bus, the first data storage area and the second data storage area form the distributed database based on the first distributed soft bus and the second distributed soft bus. The preset data synchronization policy is defined in the distributed database.

According to this technical solution, the data synchronization between the data storage area of the first electronic device and the data storage area of the second electronic device is implemented through a distributed soft bus.

According to a second aspect, an embodiment of this application provides a computer-readable storage medium including computer instructions. When the computer instructions are run on an electronic device, the electronic device is enabled to perform the notification processing method according to the first aspect.

According to a third aspect, an embodiment of this application provides an electronic device, where the electronic device includes a processor and a memory, the memory is configured to store instructions, and the processor is configured to invoke the instructions in the memory, so that the electronic device performs the notification processing method according to the first aspect.

According to a fourth aspect, a chip is provided. The chip coupled to a memory in an electronic device, wherein the chip is configured to control the electronic device to perform the notification processing method according to the first aspect.

It may be understood that the computer-readable storage medium according to the third aspect, the electronic device according to the fourth aspect, the computer program product according to the fifth aspect, and the apparatus according to the sixth aspect all correspond to the method according to the first aspect. Therefore, for beneficial effects that can be achieved, refer to beneficial effects in the corresponding method provided above. Details are not described herein again.

### BRIEF DESCRIPTION OF DRAWINGS

FIG. 1 is a schematic diagram of a structure of an electronic device according to an embodiment of this application;
FIG. 2 is a schematic diagram of a software structure of an electronic device according to an embodiment of this application;
FIG. 3a and FIG. 3b are schematic diagrams of system architectures of a notification processing method according to an embodiment of this application;
FIG. 4a is a schematic diagram of a notification control interface of global notification management according to an embodiment of this application;
FIG. 4b is a schematic diagram of a notification control interface of a first application according to an embodiment of this application;
FIG. 4c is a schematic diagram of an interface of a device selection pop-up box according to an embodiment of this application;
FIG. 5 is a schematic diagram of a system architecture of multi-device notification associative cancellation according to an embodiment of this application;
FIG. 6a and FIG. 6b are schematic diagrams of a system architecture of multi-device notification associative opening according to an embodiment of this application;
FIG. 7 is a schematic flowchart of a notification processing method according to an embodiment of this application;
FIG. 8 is a schematic flowchart of a notification processing method according to another embodiment of this application;
FIG. 9 is a schematic diagram of an architecture of a notification processing system according to an embodiment of this application; and
FIG. 10 is a schematic diagram of a possible structure of a first electronic device according to an embodiment of this application.

### DESCRIPTION OF EMBODIMENTS

It should be noted that, in this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In this specification, claims, and accompanying drawings of this application, terms "first", "second", "third", "fourth", and the like (if exist) are intended to distinguish between similar objects but do not necessarily indicate a specific order or sequence.

In embodiments of this application, a word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

For ease of understanding, descriptions of some concepts related to embodiments of this application are provided as examples for reference.

A plurality of electronic devices may form a super device by using a communication network. The super device may be defined as presenting the plurality of electronic devices as a unified whole (for example, capabilities of the plurality of electronic devices are integrated by using a distributed technology, stored in a virtual hardware resource pool, and are centrally managed and scheduled based on service requirements, to provide services externally), to implement collaborative management and resource sharing of the plurality of electronic devices, and organically integrate the plurality of electronic devices in a use environment, thereby improving user experience in the use environment of the plurality of electronic devices. Each electronic device is a component of the super device, and the electronic devices share capabilities with each other and are peripherals of each other, which is like running applications (application, app) on a same electronic device, and like using a same electronic device by a user.

The electronic device may be at least one of a mobile phone, a foldable electronic device, a tablet computer, a personal computer (personal computer, PC), a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. A specific type of the electronic device is not specially limited in embodiments of this application. The communication network may be a wired network, or may be a wireless network. For example, the communication network may be a local area network (local area network, LAN), or may be a wide area network (wide area network, WAN), for example, the Internet. When the communication network is the local area network, for example, the communication network may be a short-range communication network like a Wi-Fi hotspot network, a Wi-Fi P2P network, a Bluetooth network, a ZigBee network, or a near field communication (near field communication, NFC) network. When the communication network is the wide area network, for example, the communication network may be a 3rd-generation mobile communication technology (3rd-generation mobile communication technology, 3G) network, a 4th-generation mobile communication technology (4th-generation mobile communication technology, 4G) network, a 5th-generation mobile communication technology (5th-generation mobile communication technology, 5G) network, a future-evolved public land mobile network (public land mobile network, PLMN), or the Internet.

One or more apps may be installed on the electronic device. App is the short term for app, and is a software program that can implement one or more specific functions. For example, an instant messaging application, a video application, an audio application, an image photographing application, and a cloud desktop application. The instant messaging application may include, for example, a short message application, WeChat^{®} (WeChat^{®}), WhatsApp Messenger^{®}, LINE^{®} (Line^{®}), Instagram^{®} (instagram^{®}), Kakao Talk^{®}, and DingTalk^{®}. The image photographing application may include, for example, a camera application (a system camera or a third-party camera application). The video application may include, for example, YouTube^{®}, Twitter^{®}, TikTok^{®}, iQIYI^{®}, and Tencent Video^{®}. The audio application may include, for example, KuGou^{®}, XiaMi Music^{®}, and QQ Music^{®}. The application in the following embodiments may be a system application installed before the electronic device is delivered, or may be a third-party application downloaded from a network or obtained from another electronic device by a user in a process of using the electronic device.

The electronic device includes but is not limited to carrying iOS^{®}, Android^{®} (Android^{®}), Windows Mobile^{®}, HarmonyOS^{®}, or another operating system.

A notification is a basic function of the electronic device, and is used to remind the user that there is a new instant messaging message or a new event. The notification may also be referred to as a reminder, a message, a reminder message, prompt information, or the like. When receiving external new information or internally triggering a new event (for example, an alarm, a system prompt, or an application push), the electronic device usually displays content of a related notification on a screen in a timely manner, or may push the content of the notification to the user in a timely manner in combination with a sound prompt or a vibration prompt, or in another manner. For example, a display style of the notification may include any one of the following: displaying a banner on the top of the screen, displaying a banner on a lock screen, updating a number on an app icon, and popping up a UIAlertView in the middle of the screen.

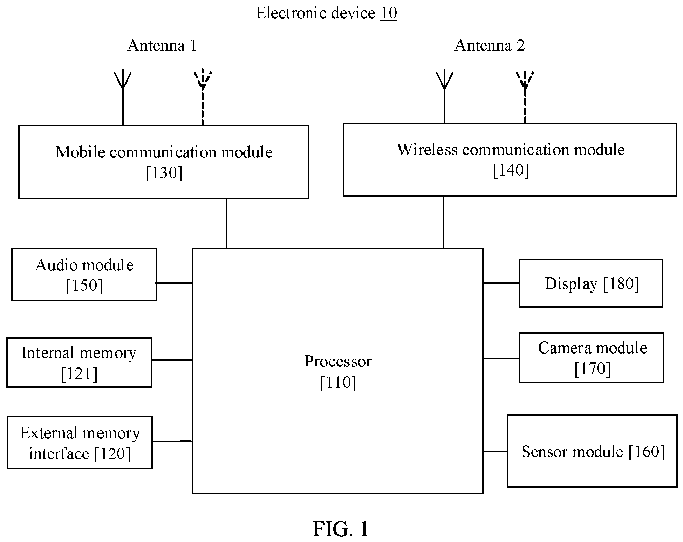

FIG. 1 is a schematic diagram of a structure of an electronic device 10.

The electronic device 10 may include a processor 110, an external memory interface 120, an internal memory 121, an antenna 1, an antenna 2, a mobile communication module 130, a wireless communication module 140, an audio module 150, a sensor module 160, a camera module 170, a display 180, and the like.

It may be understood that the structure shown in this embodiment of this application does not constitute a specific limitation on the electronic device 10. In some other embodiments of this application, the electronic device 10 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on instruction operation code and a time sequence signal to complete control of instruction fetching and instruction execution.

A memory may be further disposed in the processor 110, and is configured to store instructions and data. In some embodiments, the memory in the processor 110 may be a cache. The memory may store instructions or data that has been used or frequently used by the processor 110. If the processor 110 needs to use the instructions or the data, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to a module like an audio module, a wireless communication module, a display, and a camera through at least one of the foregoing interfaces.

It may be understood that an interface connection relationship between the modules shown in this embodiment of this application is merely an example for description, and does not constitute a limitation on the structure of the electronic device 10. In some other embodiments of this application, the electronic device 10 may alternatively use an interface connection manner different from that in the foregoing embodiment, or a combination of a plurality of interface connection manners.

A wireless communication function of the electronic device 10 may be implemented by using the antenna 1, the antenna 2, the mobile communication module 130, the wireless communication module 140, the modem processor, the baseband processor, and the like.

The antenna 1 and the antenna 2 are configured to transmit and receive electromagnetic wave signals. Each antenna in the electronic device 10 may be configured to cover one or more communication frequency bands. Different antennas may also be multiplexed to improve antenna utilization. For example, the antenna 1 may be multiplexed as a diversity antenna of a wireless local area network. In other embodiments, the antenna may be used in combination with a tuning switch.

The mobile communication module 130 may provide a wireless communication solution that is applied to the electronic device 10 and that includes 2G, 3G, 4G, 5G, and the like. The mobile communication module 130 may include at least one filter, a switch, a power amplifier, a low noise amplifier (low noise amplifier, LNA), and the like. The mobile communication module 130 may receive an electromagnetic wave through the antenna 1, perform processing such as filtering or amplification on the received electromagnetic wave, and transmit the electromagnetic wave to the modem processor for demodulation. The mobile communication module 130 may further amplify a signal modulated by the modem processor, and convert the signal into the electromagnetic wave for radiation through the antenna 1. In some embodiments, at least some functional modules of the mobile communication module 130 may be disposed in the processor 110. In some embodiments, at least some function modules of the mobile communication module 130 and at least some modules of the processor 110 may be disposed in a same component.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal by using an audio device, or displays an image or a video by using the display 180. In some embodiments, the modem processor may be an independent component. In some other embodiments, the modem processor may be independent of the processor 110, and is disposed in a same device as the mobile communication module 130 or another functional module.

The wireless communication module 140 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), ultra-wideband (ultra-wideband, UWB), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 10. The wireless communication module 140 may be one or more components integrating at least one communication processing module. The wireless communication module 140 receives the electromagnetic wave through the antenna 2, performs frequency modulation and filtering processing on the electromagnetic wave signal, and sends a processed signal to the processor 110. The wireless communication module 140 may further receive a to-be-sent signal from the processor 110, perform frequency modulation and amplification on the signal, and convert the signal into the electromagnetic wave for radiation through the antenna 2.

In some embodiments, in the electronic device 10, the antenna 1 and the mobile communication module 130 are coupled, and the antenna 2 and the wireless communication module 140 are coupled, so that the electronic device 10 can communicate with a network and another device by using the wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 10 may implement a display function through the GPU, the display 180, the application processor, and the like. The GPU is a microprocessor for image processing, and is connected to the display 180 and the application processor. The GPU is configured to: perform mathematical and geometric computation, and render an image. The processor 110 may include one or more GPUs, which execute program instructions to generate or change display information.

The sensor module includes a touch sensor, a pressure sensor, a fingerprint sensor, and the like. The camera module 170 includes a camera. The display 180 is configured to display an image, a video, and the like. The display 180 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 10 may include one or more displays 180.

The electronic device 10 may implement a photographing function by using the camera module 170, the ISP, the video codec, the GPU, the display 180, the application processor AP, the neural processing unit NPU, and the like.

The digital signal processor is configured to process a digital signal, and may further process another digital signal. For example, when the electronic device 10 selects a frequency, the digital signal processor is configured to perform Fourier transform and the like on frequency energy.

The video codec is configured to compress or decompress a digital video. The electronic device 10 may support one or more types of video codecs. In this way, the electronic device 10 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transmission mode between human brain neurons, and may further continuously perform self-learning. Applications such as intelligent cognition of the electronic device 10 may be implemented through the NPU, for example, image recognition, facial recognition, speech recognition, and text understanding.

The external memory interface 120 may be configured to connect to an external memory card, for example, a Micro SD card, to extend a storage capability of the electronic device 10. The external memory card communicates with the processor 110 through the external memory interface 120, to implement a data storage function, for example, store files such as music and a video in the external memory card, or transfer files such as music and a video from the electronic device to the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and a phone book) and the like that are created during use of the electronic device 10. In addition, the internal memory 121 may include a high-speed random access memory, or may include a nonvolatile memory, for example, at least one magnetic disk storage device, a flash storage device, or a universal flash storage (universal flash storage, UFS). The processor 110 runs the instructions stored in the internal memory 121, and/or the instructions stored in the memory disposed in the processor, to perform various function methods of the electronic device 10 or data processing.

The audio module 150 is configured to convert digital audio information into an analog audio signal for output, and is also configured to convert an analog audio input into a digital audio signal. The audio module 150 may be further configured to encode and decode an audio signal. In some embodiments, the audio module 150 may be disposed in the processor 110, or some function modules of the audio module 150 are disposed in the processor 110.

A software system of the electronic device 10 may use a layered architecture, an event-driven architecture, a microkernel architecture, a micro service architecture, or a cloud architecture. In an embodiment of this application, an Android system with a layered architecture is used as an example to describe a software structure of the electronic device 10.

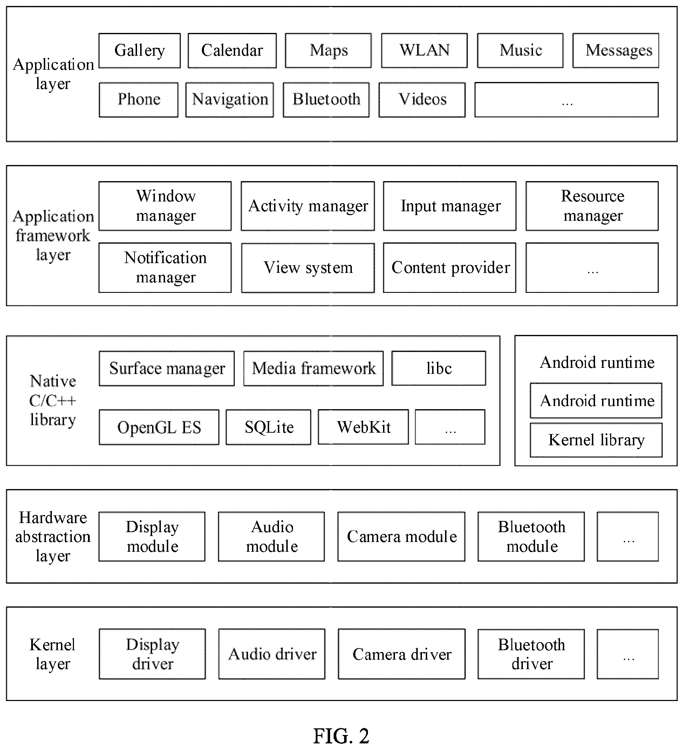

FIG. 2 is a block diagram of a software structure of the electronic device 10 according to an embodiment of this application.

In a layered architecture, software is divided into several layers, and each layer has a clear role and task. The layers communicate with each other through a software interface. In some embodiments, the Android system is divided into five layers from top to bottom: an application layer, an application framework layer, Android runtime (Android runtime, ART) and a native C/C++ library, a hardware abstraction layer (hardware abstraction layer, HAL), and a kernel layer.

The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for applications at the application layer. The application framework layer includes some predefined functions.

As shown in FIG. 2, the application framework layer may include a window manager, a content provider, a view system, a resource manager, a notification manager, an activity manager, an input manager, and the like.

The window manager provides a window manager service (window manager service, WMS), which can be used for window management, window animation management, surface management, and as a transit point for an input system.

The content provider is configured to: store and obtain data, and enable the data to be accessed by an application. The data may include a video, an image, an audio, calls that are made and received, a browsing history and bookmarks, an address book, and the like.

The view system includes visual controls like a control for displaying a text and a control for displaying an image. The view system may be configured to construct an application. A display interface may include one or more views. For example, a display interface including a short message notification icon may include a text display view and an image display view.

The resource manager provides, for the application, various resources like a localized character string, an icon, an image, a layout file, and a video file.

The notification manager enables the application to display notification information in a status bar, and may be configured to convey a notification type message, which may automatically disappear after a short stay without user interaction. For example, the notification manager is configured to notify download completion, give a message notification, and the like. The notification manager may alternatively be a notification that appears in a top status bar of a system in a form of a graph or a scroll bar text, for example, a notification of an application that is run in the background, or may be a notification that appears on a screen in a form of a dialog window. For example, text information is displayed in the status bar, an alert tone is given, the electronic device vibrates, or an indicator light blinks.

The activity manager can provide an activity manager service (activity manager service, AMS), which can be used for startup, switch, and scheduling of system components (for example, an activity, a service, a content provider, a broadcast receiver), and management and scheduling of an application process.

The input manager can provide an input manager service (input manager service, IMS), which can be used for system input management, for example, touchscreen input, key input, and sensor input. The IMS obtains an event from an input device node and allocates the event to an appropriate window through interaction with the WMS.

The Android runtime includes a core library and Android runtime. The Android runtime is responsible for converting source code into machine code. The Android runtime mainly includes an ahead of time (ahead of time, AOT) compilation technology and a just in time (just in time, JIT) compilation technology.

The core library is mainly used to provide functions of basic Java libraries, such as a basic data structure library, a mathematics library, an I/O library, a tool library, a database, and a network library. The core library provides the API for the user to develop the Android application.

The native C/C++ library may include a plurality of functional modules, for example, a surface manager (surface manager), a media framework (media framework), libc, OpenGL ES, SQLite, and WebKit.

The surface manager is configured to: manage a display subsystem, and provide fusion of 2D and 3D layers for a plurality of applications. The media framework supports playback and recording of audios and videos in a plurality of commonly used formats, static image files, and the like. The media library may support a plurality of audio and video encoding formats, for example, MPEG-4, H.264, MP3, AAC, AMR, JPG, and PNG. OpenGL ES provides drawing and manipulation of 2D and 3D graphics in the application. SQLite provides a lightweight relational database for the application of the electronic device 10.

The hardware abstraction layer runs in user space (user space), encapsulates drivers of the kernel layer, and provides an invoking interface for an upper layer.

The kernel layer is a layer between hardware and software. The kernel layer includes at least a display driver, a camera driver, an audio driver, and a sensor driver.

The following describes examples of working procedures of software and hardware of the electronic device 10 with reference to a photographing scenario.

When the display receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a touch tap operation, and a control corresponding to the tap operation is a control of a camera application icon is used. The camera application invokes an interface of the application framework layer to start the camera application, then starts the camera driver by invoking the kernel layer, and captures a static image or a video through the camera.

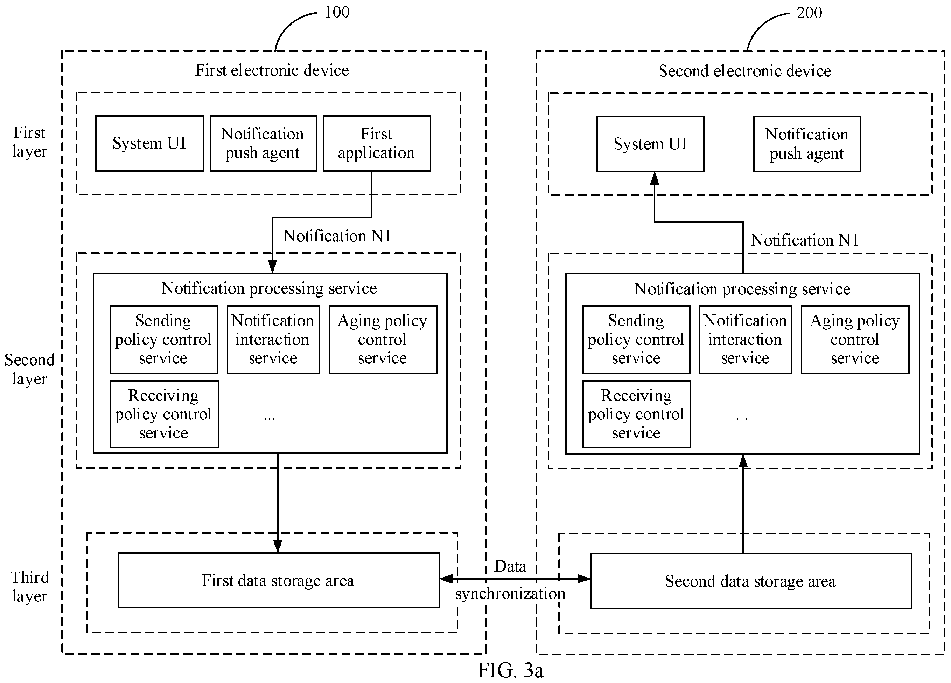

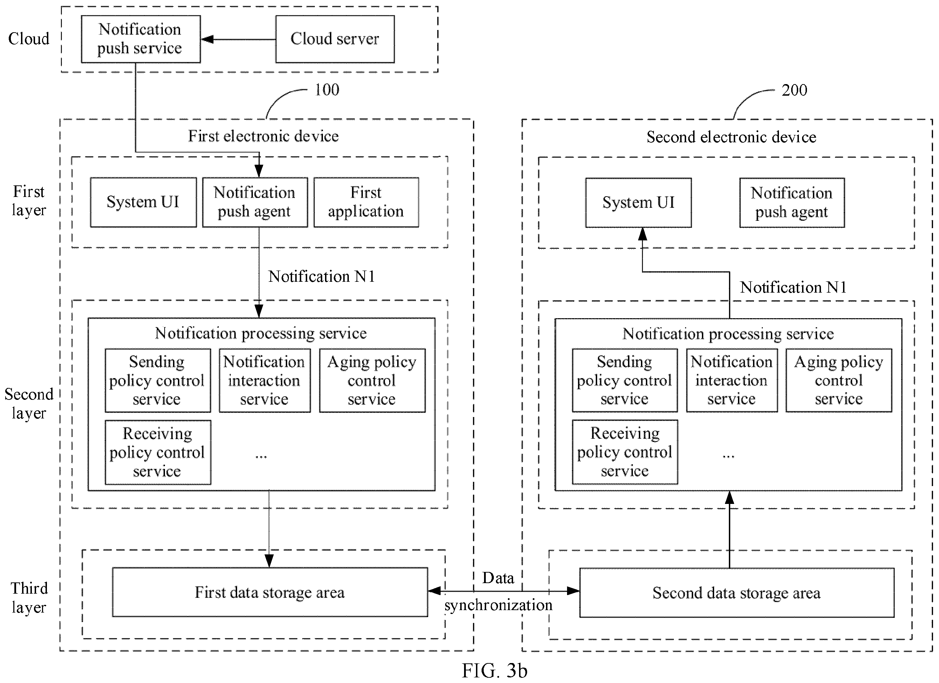

With reference to FIG. 3a and FIG. 3b, the following describes example schematic diagrams of system architectures of a notification processing method according to an embodiment of the present invention.

This embodiment may include two electronic devices (for example, the electronic device 10 shown in FIG. 1). Notifications of the electronic devices may be classified into a local push notification and a remote push notification. The local push notification may be a notification pushed by an app in the electronic device. For example, a fitness app periodically reminds a user of fitness. The remote push notification may be a notification pushed by a cloud server of an app, and does not depend on whether the electronic device starts the app. For example, if WeChat^{®} is installed on the electronic device, a WeChat server may push a to-be-sent message to a POST cloud service. The POST cloud service searches for an electronic device with a corresponding identifier in a list that is of the POST cloud service and that includes electronic devices registered with a push service, and sends the message to the electronic device. The electronic device pops up a notification based on the received message. For distinction in description, the two electronic devices are referred to as a first electronic device 100 and a second electronic device 200 in the following. The first electronic device 100 and the second electronic device 200 may be located in a same local area network, and the first electronic device 100 and the second electronic device 200 may implement data exchange by using an interconnection and interworking protocol, a distributed soft bus, or the like. The distributed soft bus can provide a unified distributed communication capability for interconnection and interworking between electronic devices.

The first electronic device 100 and the second electronic device 200 include but are not limited to devices like a mobile phone, a smartwatch, a tablet computer, a PC, a notebook computer, and a smart appliance. The following uses an example in which the first electronic device 100 is the mobile phone, the second electronic device 200 is the smartwatch, the first electronic device 100 communicates with the second electronic device 200 by using the distributed soft bus, and a notification of the first electronic device 100 is synchronized to the second electronic device 200 for description.

As shown in FIG. 3a and FIG. 3b, a first application app₁ is installed on the first electronic device 100. The first application app₁ may be any one of a gallery application, a phone application, a map application, a music application, a video application, an e-commerce application, or the like. Both the first electronic device 100 and the second electronic device 200 may be divided into three layers based on notification processing layers: a first layer, a second layer, and a third layer. The layers may communicate with each other by using a software interface.

The first layer may include an app that sends a notification, a notification push agent (push agent), a system UI (system UI) that displays the notification, and the like. The push agent is a message push mechanism, and may push an application notification, a system update notification, and the like. The system UI may include a status bar (status bar) at the top of a system, a navigation bar (navigation bar) at the bottom of the system, a keyguard (keyguard) screen, a power UI (power UI), a recents screen (recents screen), a volume UI (volume UI), and the like. The second layer may include a notification processing service for performing notification-related processing. The notification processing service may include a notification interaction service, a sending policy control service, an aging policy control service, a receiving policy control service, and the like. For example, the notification interaction service may receive a notification transferred by the first layer, the notification received by the notification interaction service may be transferred to the sending policy control service for sending control, and the notification output by the sending policy control service may be synchronized to another electronic device. For another example, a notification synchronized by another electronic device is controlled by the receiving policy control service, the notification output by the receiving policy control service may be transferred to the notification interaction service, and the notification interaction service transfers the notification to the system UI for display. For another example, when the aging policy control service receives notification cancellation information triggered by an electronic device in a super device by canceling a notification, the aging policy control service transfers the notification cancellation information to the notification interaction service, and the notification interaction service is used to notify the system UI to cancel displaying the notification. The third layer may include a data storage area for performing distributed data management on the notification. The data storage area may be a storage area on a memory of the electronic device, for example, a storage area of the internal memory 121. Data storage areas of the electronic devices in the super device may form a distributed database.

In some embodiments, distributed data management implements distributed management of application data and user data based on a capability of the distributed soft bus. The user data is not bound to a single physical device, and service logic is separated from data storage. In this way, cross-device data processing is as convenient as local data processing, and data can be stored, shared, and accessed on a plurality of devices. The data storage areas of the electronic devices in the super device may implement data synchronization by using the distributed data management. For example, the data synchronization may be performed on the data storage areas of the electronic devices based on a preset data synchronization policy. The preset data synchronization policy may be selected based on an actual development requirement, which is not limited in this application.

In some embodiments, a plurality of callbacks may be preset in the data storage areas of the electronic devices. When data is added to, deleted from, or updated in the data storage areas, the data storage areas may return information to the notification processing service by executing a preset callback function. For example, the plurality of callbacks are set in the data storage areas by the notification processing service.

In some embodiments, a user may customize, on a notification management interface of the electronic device, a notification management policy of the electronic device, for example, whether the notification supports distributed synchronization, electronic devices in which the notification can be opened in the super device, and electronic devices on which the notification can be displayed in the super device. The notification management interface can invoke, in response to user operation instructions, a notification management API to set system parameters (for example, parameters in NotificationRequest) to configure the foregoing notification policy. The user can formulate different notification management policies based on performance differences of the electronic devices in the super device.

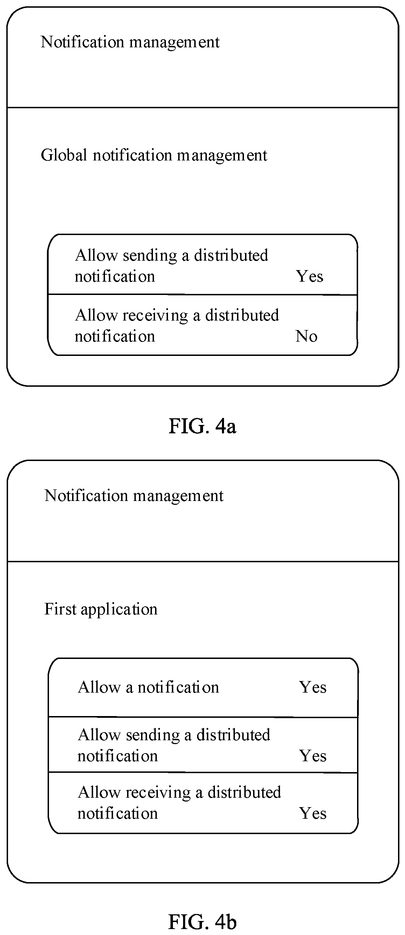

For example, as shown in FIG. 4a, the user may set, on a global notification management interface of notification management, whether the electronic device supports sending or receiving a distributed notification. When "Allow sending a distributed notification" is set to "Yes", it indicates that the electronic device is allowed to synchronize a notification to another electronic device (another electronic device in the super device). When "Allow sending a distributed notification" is set to "No", it indicates that the electronic device is not allowed to synchronize a notification to another electronic device. When "Allow receiving a distributed notification" is set to "Yes", it indicates that the electronic device is allowed to receive a notification synchronized from another electronic device. When "Allow receiving a distributed notification" is set to "No", it indicates that the electronic device is not allowed to receive a notification synchronized from another electronic device.

As shown in FIG. 4b, the user may further set, on an app management interface of the notification management, whether an app allows notification and whether the app supports sending or receiving the distributed notification. For example, for the first application app₁ installed on the first electronic device 100, the user may perform notification setting on a first application management interface of thr notification management. When "Allow notification" is set to "Yes", it indicates that the first application app₁ is allowed to push a notification. When "Allow notification" is set to "No", it indicates that the first application app₁ is not allowed to push a notification. When "Allow sending a distributed notification" is set to "Yes", it indicates that a notification of the first application app₁ is allowed to be synchronized to another electronic device. When "Allow sending a distributed notification" is set to "No", it indicates that a notification of the first application app₁ is not allowed to be synchronized to another electronic device. When "Allow receiving a distributed notification" is set to "Yes", it indicates that the first application app₁ is allowed to receive a notification synchronized from another electronic device. When "Allow receiving a distributed notification" is set to "No", it indicates that first application app₁ is not allowed to receive a notification synchronized from another electronic device.

In some embodiments, a notification N1 of the first application app₁ may be generated in two manners. Manner 1 is shown in FIG. 3a. The first application app₁ invokes a notification API to push the notification N1, and the notification N1 pushed by the first application app₁ is transferred to a notification processing service at the second layer for notification processing. Manner 2 is shown in FIG. 3b. A cloud server corresponding to the first application app₁ may push a message to the first electronic device 100 by using a notification push service (for example, a POST cloud service). The first electronic device 100 may invoke, based on the received message, the notification API to push the notification N1, and the notification N1 may be transferred to the notification processing service at the second layer by using the notification push agent for notification processing.

The notification processing service of the first electronic device 100 may perform notification processing based on the notification management policy of the first electronic device 100. For example, when the first electronic device 100 is set to allow the first application app₁ to push the notification, the notification processing service of the first electronic device 100 may send the notification N1 to a system UI of the first electronic device 100 for display, so that the notification N1 is displayed on the first electronic device 100. The notification N1 is displayed on the first electronic device 100 regardless of whether the first application app₁ is installed on the first electronic device 100.

When the first electronic device 100 is set to allow the notification of the first application app₁ to be synchronized to another electronic device, the notification processing service of the first electronic device 100 may write information about the notification N1 into a first data storage area of the first electronic device 100. For example, the information about the notification N1 is written into the first data storage area in a form of key+data. The key may include a unique identifier of the notification N1. The key may include one or more of a package name of the first application app₁, an ID of the notification N1, and an ID of the first electronic device 100. The data may include specific content of the notification N1. For example, the data may include one or more of a notification title, notification text content, a notification rich text (a notification icon, an image, or the like), and notification interaction information. The notification interaction information may include interaction information such as notification opening and notification cancellation. When the information about the notification N1 is written into the first data storage area of the first electronic device 100, the information about the notification N1 may be synchronously written into a second data storage area of the second electronic device 200 based on the distributed data management.

When the information about the notification N1 is synchronized to the second data storage area of the second electronic device 200, the second data storage area of the second electronic device 200 may be triggered to execute a notification addition callback, and the second data storage area of the second electronic device 200 may return notification N1 addition information, and the notification N1 addition information may be transferred to a notification processing service of the second electronic device 200. The notification processing service of the second electronic device 200 may process the notification N1 addition information based on the notification management policy of the second electronic device 200. For example, when the second electronic device 200 is set to allow receiving the distributed notification, the notification processing service of the second electronic device 200 may send the notification N1 to a system UI of the second electronic device 200 for display, so that the notification N1 of the first electronic device 100 is synchronously display on the second electronic device 200.

It may be understood that, for another electronic device in the super device, a notification synchronization processing manner similar to that of the second electronic device 200 may be used to synchronously display the notification N1 of the first electronic device 100.

In some embodiments, the electronic devices in the super device may perform combination processing on same notifications, to avoid repeated display of the notifications. For example, notifications with same data and application package names may be defined as same notifications, and combination processing of the notifications may be performed in the data storage area or the notification processing service.

In some embodiments, after the notification N1 of an electronic device is canceled, another electronic device may cancel the notification N1 associatively. For example, when the user opens the notification N1 or deletes the notification N1 on an electronic device, the notification N1 on another electronic device may be canceled associatively.

It is assumed that the user deletes the notification N1 on the second electronic device 200, and the notification processing service of the second electronic device 200 may delete, in response to a notification deletion operation of the user, information that is about the notification N1 and that is stored in the second data storage area of the second electronic device 200. When the information about the notification N1 is deleted from the second data storage area of the second electronic device 200, the first data storage area of the first electronic device 100 may synchronously delete, based on the distributed data management, the stored information about the notification N1.

When the first data storage area of the first electronic device 100 deletes the stored information about the notification N1, the first data storage area of the first electronic device 100 may be triggered to execute a notification deletion callback, and return notification N1 deletion information. The notification processing service of the first electronic device 100 may be used to notify (control) the system UI of the first electronic device 100 based on the notification N1 deletion information to cancel displaying the notification N1, so that when the user views the notification N1 on the second electronic device 200, the first electronic device 100 synchronously cancels displaying the notification N1.

For example, the first electronic device 100 is the mobile phone, and the second electronic device 200 is the smartwatch. The user takes a bus to a station A by swiping a code of a bus app on the mobile phone. When the bus is about to arrive at the station A, the bus app sends a notification to remind the user that the bus is about to arrive at the station A. The notification may be synchronized to the smartwatch by using the mobile phone. The user may view the notification by using the smartwatch, and swipe up to cancel the notification. In addition, the notification on the mobile phone may also be canceled.

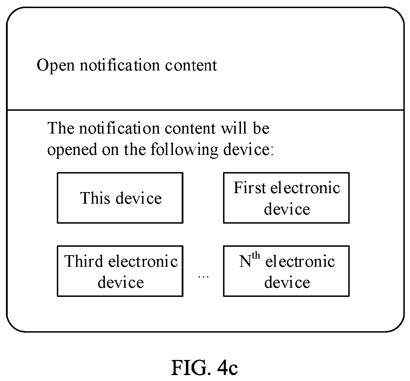

In some embodiments, when the notification N1 of the first electronic device 100 is synchronized to another electronic device in the super device, the user may choose to tap the notification N1 on the first electronic device 100 or the another electronic device to perform page redirection. For example, when the user taps the notification N1 on the second electronic device 200, the second electronic device 200 may enable a device selection control. For example, a device selection pop-up box shown in FIG. 4c is displayed. The user may select, in the device selection pop-up box, to open the notification N1 on a device, to perform page redirection. It is assumed that the super device includes the first electronic device 100, the second electronic device 200, a third electronic device, ..., and an N^{th} electronic device. If the user taps the notification N1 on the second electronic device 200, the device selection pop-up box popped up by the second electronic device 200 may include "This device", the first electronic device, the third electronic device, ..., and the N^{th} electronic device. Similarly, if the user taps the notification N1 on the first electronic device 100, a device selection pop-up box popped up by the first electronic device 100 may include "This device", the second electronic device, the third electronic device, ..., and the N^{th} electronic device.

In some embodiments, the first electronic device 100 may obtain device information (such as software and hardware performance, for example, a display, a processor, and an operating system) of each electronic device in the super device, and determine, based on the device information and a component corresponding to a currently opened notification, electronic devices that have a capability of enabling the component, so that only the electronic devices having the capability of enabling the component may be displayed in the device selection pop-up box.

In some embodiments, when the user selects, in the device selection pop-up box of the second electronic device 200, this device to open the notification N1, the second electronic device 200 may open, based on an application parameter carried in the notification N1, a component of an app corresponding to the notification N1. The component may be a task, a process, or a thread of the app. One app may include a plurality of components, one component may include a plurality of pages, and the pages may include display content (images and texts), an input control that can receive an instruction input by the user, and the like. For example, the component may refer to an activity of an Android^{®} system, an ability of a HarmonyOS^{®} system, and the like.

For example, if the app corresponding to the notification N1 is running, when the user taps the notification N1, the application parameter may be transferred to intent to open the corresponding component; or if the app corresponding to the notification N1 is not started, when the user taps the notification N1, the app corresponding to N1 may be started, and then the corresponding component is redirected to. If the app corresponding to the notification N1 is not downloaded to the second electronic device 200, prompt information may be output to prompt the user whether to download and install the app corresponding to the notification N1 on the second electronic device 200, and after installation is completed, the app corresponding to N1 may be started, and the corresponding component is redirected to; or the app corresponding to the notification N1 is downloaded and installed silently, and after installation is completed, the app corresponding to N1 is started, and then the corresponding component is redirected to.

In some embodiments, when the user selects, in the device selection pop-up box of the second electronic device 200, the first electronic device 100 to open the notification N1, the notification processing service of the second electronic device 200 may write, in response to a device selection instruction of the user, notification opening information into the second data storage area of the second electronic device 200, and the first electronic device 100 may write the notification opening information into the first data storage area of the first electronic device 100 based on the distributed data management. The notification opening information may include identification information marking that the notification is opened by using the first electronic device 100 and the application parameter carried in the notification N1.

When the notification opening information is synchronized to the first data storage area of the first electronic device 100, the first data storage area of the first electronic device 100 may be triggered to execute a notification opening callback, and return notification N1 opening information. The first data storage area of the first electronic device 100 may transfer the application parameter carried in the notification N1 to the notification processing service of the first electronic device 100, and the notification processing service opens, based on the application parameter carried in the notification N1, the component of the app corresponding to the notification N1.

For example, a mobile phone, a smartwatch, and a smart screen form a super device. The user subscribes to a ball match b1 of a video app by using the smart screen. When the ball match b1 is about to start (for example, 10 minutes before the ball match b1 starts), the video app of the smart screen sends a notification to remind the user. The notification may be synchronously sent to the mobile phone and the smartwatch by using the smart screen. After the user views the notification on the smartwatch, the user taps the notification on the smartwatch, selects the smart screen to open notification content, and then starts the video app of the smart screen to play the ball match b1.

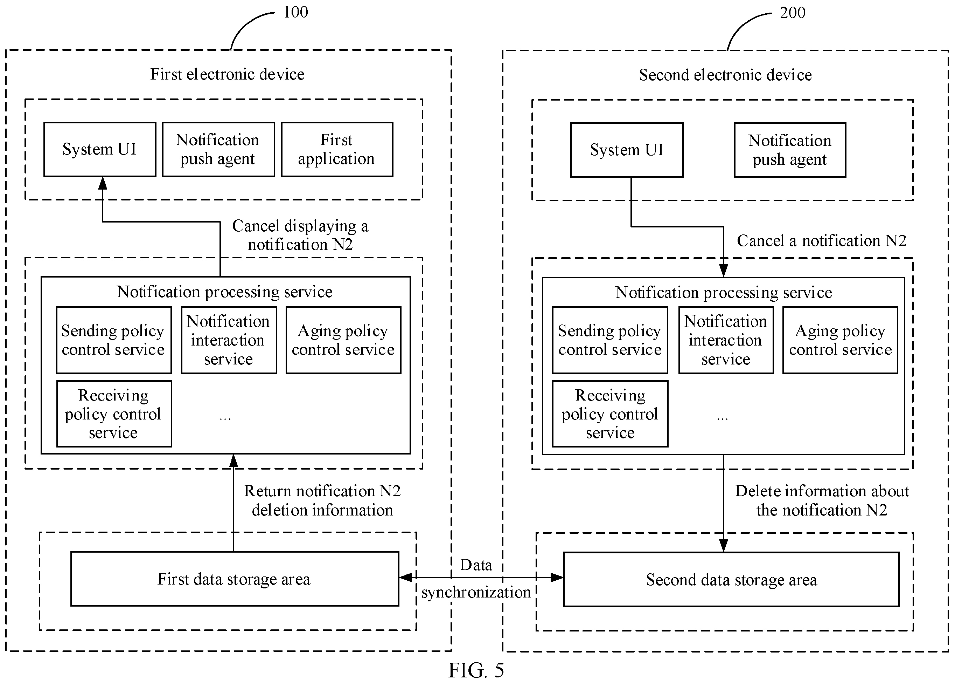

With reference to FIG. 5, the following describes an example schematic diagram of a system architecture of multi-device notification associative cancellation according to an embodiment of the present invention.

The embodiment includes the first electronic device 100 and the second electronic device 200. The following uses an example in which the first electronic device 100 is a mobile phone and the second electronic device 200 is a tablet computer. The first electronic device 100 and the second electronic device 200 are in a same local area network, and the first electronic device 100 and the second electronic device 200 implement data exchange by using the distributed soft bus.

It is assumed that both the first electronic device 100 and the second electronic device 200 display a notification N2. When the second electronic device 200 cancels the notification N2 (for example, the user deletes the notification N2 on the system UI of the second electronic device 200), the system UI of the second electronic device 200 may transfer an operation instruction of the user to the notification processing service, and the notification processing service of the second electronic device 200 may delete, based on the operation instruction of the user, information that is about the notification N2 and that is stored in the second data storage area of the second electronic device 200.

When the information about the notification N2 is deleted from the second data storage area of the second electronic device 200, the first data storage area of the first electronic device 100 may, based on the distributed data management, synchronously delete stored information about the notification N2.

When the first data storage area of the first electronic device 100 deletes the stored information about the notification N2, the first data storage area of the first electronic device 100 may be triggered to execute the notification deletion callback, and return notification N2 deletion information. The notification processing service of the first electronic device 100 is used to notify the system UI of the first electronic device 100 based on the notification N2 deletion information to cancel displaying the notification N2, so that when the tablet computer cancels the notification N2, the mobile phone may synchronously cancel displaying the notification N2.

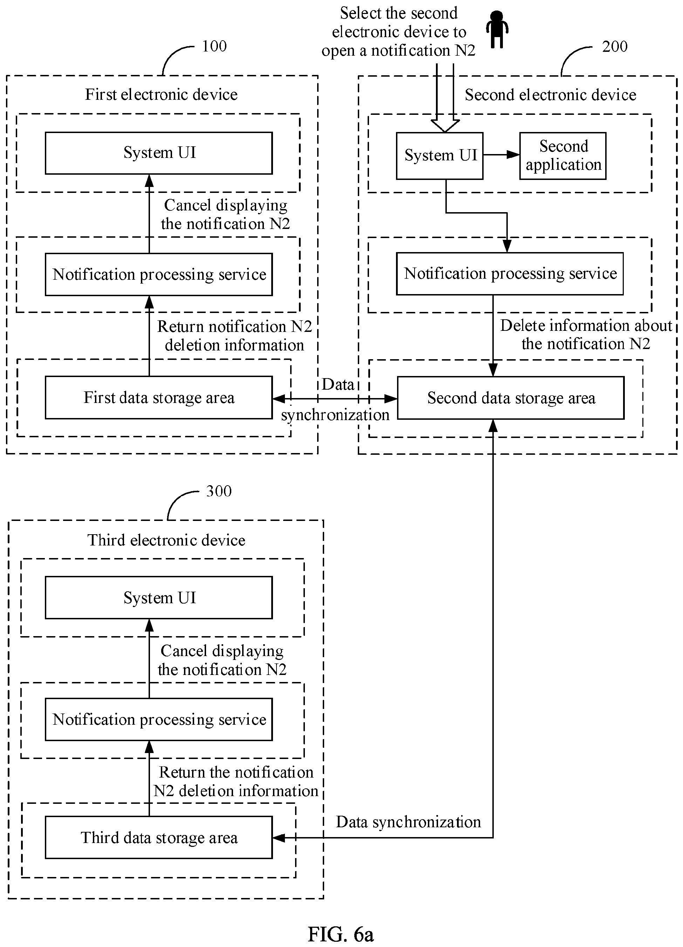

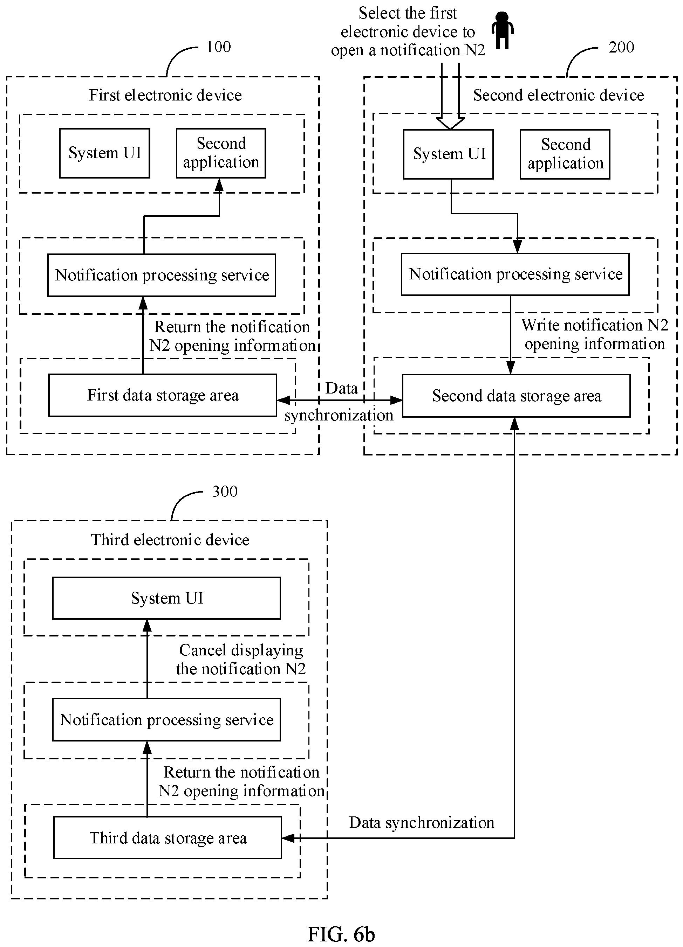

With reference to FIG. 6a and FIG. 6b, the following describes example schematic diagrams of system architectures of multi-device notification associative opening according to an embodiment of the present invention.

This embodiment includes the first electronic device 100, the second electronic device 200, and a third electronic device 300. The following uses an example in which the first electronic device 100 is a smartwatch, the second electronic device 200 is a smart screen, and the third electronic device 300 is a mobile phone. The first electronic device 100, the second electronic device 200, and the third electronic device 300 are in a same local area network, and the first electronic device 100, the second electronic device 200, and the third electronic device 300 may implement data exchange by using the distributed soft bus.

It is assumed that the first electronic device 100, the second electronic device 200, and the third electronic device 300 all display the notification N2. The user taps the notification N2 on the second electronic device 200 to pop up the device selection pop-up box, as shown in FIG. 6a, and when the user selects, in the device selection pop-up box, this device (this device is the second electronic device 200) to open the notification N2, the second electronic device 200 may open, based on an application parameter carried in the notification N2, a component of a second application app₂ corresponding to the notification N2.

The system UI of the second electronic device 200 may transfer the operation instruction of the user for the notification N2 to the notification processing service, and the notification processing service of the second electronic device 200 may delete, based on the operation instruction, the information that is about the notification N2 and that is stored in the second data storage area of the second electronic device 200.

When the information about the notification N2 is deleted from the second data storage area of the second electronic device 200, the first data storage area of the first electronic device 100 may synchronously delete the stored information about the notification N2 based on the distributed data management, and a third data storage area of the third electronic device 300 may also synchronously delete, based on the distributed data management, the stored information about the notification N2.

When the first data storage area of the first electronic device 100 deletes the stored information about the notification N2, the first data storage area of the first electronic device 100 may be triggered to execute the notification deletion callback, and return the notification N2 deletion information. The notification processing service of the first electronic device 100 may be used to notify the system UI of the first electronic device 100 based on the notification N2 deletion information to cancel displaying the notification N2. When the third data storage area of the third electronic device 300 deletes the stored information about the notification N2, the third data storage area of the third electronic device 300 may be triggered to execute the notification deletion callback, and return the notification N2 deletion information. A notification processing service of the third electronic device 300 may be used to notify a system UI of the third electronic device 300 based on the notification N2 deletion information to cancel displaying the notification N2, so that when the smart screen opens the notification N2, both the mobile phone and the smartwatch can synchronously cancel displaying the notification N2.

As shown in FIG. 6b, when the user selects, in the device selection pop-up box, the first electronic device 100 to open the notification N2, the notification processing service of the second electronic device 200 may write, in response to the operation instruction of the user, notification N2 opening information into the second data storage area of the second electronic device 200. The notification N2 opening information may be synchronously written, based on the distributed data management, to both the first data storage area of the first electronic device 100 and the third data storage area of the third electronic device 300. The notification N2 opening information may include identification information marking that the notification is opened by using the first electronic device 100 and the application parameter carried in the notification N2.

When the notification N2 opening information is synchronized to the first data storage area of the first electronic device 100, the first data storage area of the first electronic device 100 may be triggered to execute a notification opening callback, and return the notification N2 opening information. Because the notification N2 opening information includes the identification information marking that the notification is opened by using the first electronic device 100, the first data storage area of the first electronic device 100 may transfer the application parameter carried in the notification N2 to the notification processing service of the first electronic device 100. The notification processing service of the first electronic device 100 opens, based on the application parameter carried in the notification N2, the component of the second application app₂ corresponding to the notification N2. The notification processing service of the first electronic device 100 is further used to notify the system UI of the first electronic device 100 based on the notification N2 to cancel displaying the notification N2. When the notification N2 opening information is synchronized to the third data storage area of the third electronic device 300, the third data storage area of the third electronic device 300 may be triggered to execute the notification opening callback, and return the notification N2 opening information. The notification processing service of the third electronic device 300 is used to notify the system UI of the third electronic device 300 based on the notification N2 opening information to cancel displaying the notification N2.

In some embodiments, when an electronic device opens the notification N2, a notification processing service of the electronic device may further update, to a data storage area of the electronic device, notification N2 read information, and the data storage area of the electronic device may refresh stored information about the notification N2, to record that the notification N2 is read. A data storage area of another electronic device may synchronously refresh, based on the distributed data management, stored information about the notification N2. When the data storage area of the another electronic device refreshes the stored information about the notification N2, the data storage area may be triggered to return the notification N2 read information. The notification processing service of the another electronic device may be used to notify a system UI based on the notification N2 read information to cancel displaying the notification N2, or when an electronic device opens the notification N2, another electronic device may synchronously cancel displaying the notification N2.

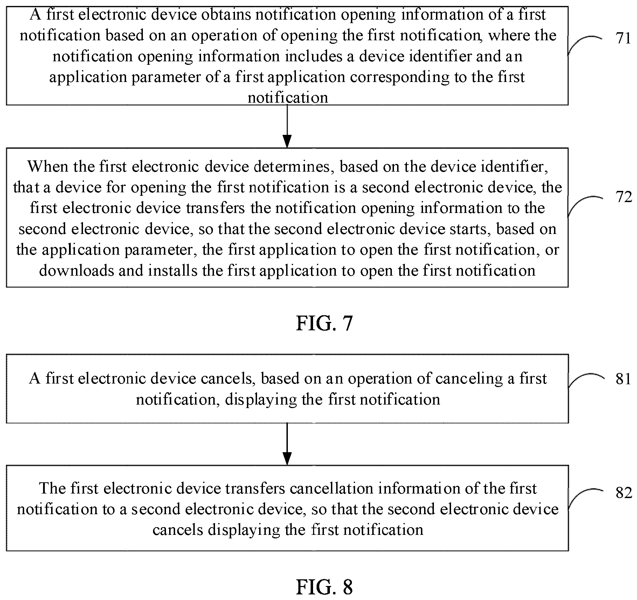

Refer to FIG. 7. An embodiment of this application provides a notification processing method, applied to the first electronic device 100. The first electronic device 100 displays a first notification. In this embodiment, the notification processing method may include:
71: The first electronic device 100 obtains notification opening information of the first notification based on an operation of opening the first notification, where the notification opening information includes a device identifier and an application parameter of a first application corresponding to the first notification.

In some embodiments, the operation of opening the first notification may include a first operation and a second operation. The first electronic device 100 may enable a device selection control in response to the first operation. For example, a user taps the first notification on the first electronic device 100 to pop up the device selection control. The device selection control may include identification information such as names and numbers of a plurality of devices in a super device. The user may perform the second operation on the device selection control, and select a device for starting the first application to open the first notification.

72: When the first electronic device 100 determines, based on the device identifier, that the device for opening the first notification is the second electronic device 200, the first electronic device 100 transfers the notification opening information to the second electronic device 200, so that the second electronic device 200 starts, based on the application parameter, the first application to open the first notification, or downloads and installs the first application to open the first notification.

In some embodiments, the first electronic device 100 includes a first data storage area and a first distributed soft bus, the second electronic device 200 includes a second data storage area and a second distributed soft bus, and the first data storage area and the second data storage area may form a distributed database based on the first distributed soft bus and the second distributed soft bus. A preset data synchronization policy is defined in the distributed database. When the first electronic device 100 writes the notification opening information into the first data storage area, the second electronic device 200 may write the notification opening information into the second data storage area based on the preset data synchronization policy, so that the second electronic device 200 may start, based on the application parameter in the notification opening information, the first application to open the first notification, or download and install the first application to open the first notification.

In some embodiments, when the first electronic device 100 determines, based on the device identifier, that the device for opening the first notification is this device, the first electronic device 100 may start, based on the application parameter, the first application to open the first notification, or download and install the first application to open the first notification.

In some embodiments, when the first electronic device 100 is selected to start the first application to open the first notification, the first electronic device 100 may further transfer, to the second electronic device 200, first notification opening information, so that the second electronic device 200 may synchronously cancel displaying the first notification. The first electronic device 100 may transfer, to the second electronic device 200 in two manners, the first notification opening information. Manner 1: The first electronic device 100 sets a notification read status that is of the first notification and that is stored in the first data storage area to read, so that the second electronic device 200 updates, based on the preset data synchronization policy, a notification read status that is of the first notification and that is stored in the second data storage area to read. When the notification read status that is of the first notification and that is stored in the second data storage area is updated to read, the second data storage area may return notification read information, so that the second electronic device 200 may cancel, based on the notification read information, displaying the first notification. Manner 2: The first electronic device 100 deletes information that is about the first notification and that is stored in the first data storage area, so that the second electronic device 200 deletes, based on the preset data synchronization policy, information that is about the first notification and that is stored in the second data storage area. When the information about the first notification is deleted from the second data storage area, the second data storage area may return notification deletion information, so that the second electronic device 200 may cancel, based on the notification deletion information, displaying the first notification.

According to the foregoing notification processing method, for the first notification synchronously displayed on a plurality of devices, the first notification may be tapped on any device and a device for opening the first notification may be selected. In this way, the device specified by the user starts the first application to open the first notification. If the first application is not installed on the specified device, the first application may be silently downloaded and installed, or the first application may be further downloaded and installed according to a user download confirmation instruction. This implements a cross-device notification opening operation, and improves user experience.

Refer to FIG. 8. Another embodiment of this application provides a notification processing method, applied to the first electronic device 100. Both the first electronic device 100 and the second electronic device 200 display a first notification. In this embodiment, the notification processing method may include:
81: The first electronic device 100 cancels, based on an operation of canceling the first notification, displaying the first notification.

In some embodiments, the operation of canceling the first notification may be notification display cancellation caused by a notification deletion operation or a notification opening operation.

82: The first electronic device 100 transfers cancellation information of the first notification to the second electronic device 200, so that the second electronic device 200 cancels displaying the first notification.

In some embodiments, the first electronic device 100 includes a first data storage area and a first distributed soft bus, the second electronic device 200 includes a second data storage area and a second distributed soft bus, and the first data storage area and the second data storage area may form a distributed database based on the first distributed soft bus and the second distributed soft bus. A preset data synchronization policy is defined in the distributed database. When the operation of canceling the first notification is the notification opening operation, the first electronic device 100 may set a notification read status that is of the first notification and that is stored in the first data storage area to read, so that the second electronic device 200 updates, based on the preset data synchronization policy, a notification read status that is of the first notification and that is stored in the second data storage area to read. When the notification read status that is of the first notification and that is stored in the second data storage area is updated to read, the second data storage area may return notification read information, so that the second electronic device 200 may cancel, based on the notification read information, displaying the first notification.

In some embodiments, when the operation of canceling the first notification is the notification deletion operation, the first electronic device 100 may delete information that is about the first notification and that is stored in the first data storage area, so that the second electronic device 200 deletes, based on the preset data synchronization policy, information that is about the first notification and that is stored in the second data storage area. When the information about the first notification is deleted from the second data storage area, the second data storage area may return notification deletion information, so that the second electronic device 200 may cancel, based on the notification deletion information, displaying the first notification.

According to the foregoing notification processing method, for the first notification synchronously displayed on a plurality of devices, when the first electronic device cancels displaying the first notification, another electronic device may synchronously cancel, based on the cancellation information that is of the first notification and that is transferred by the first electronic device, displaying the first notification, to implement notification associative cancellation and improve user experience.

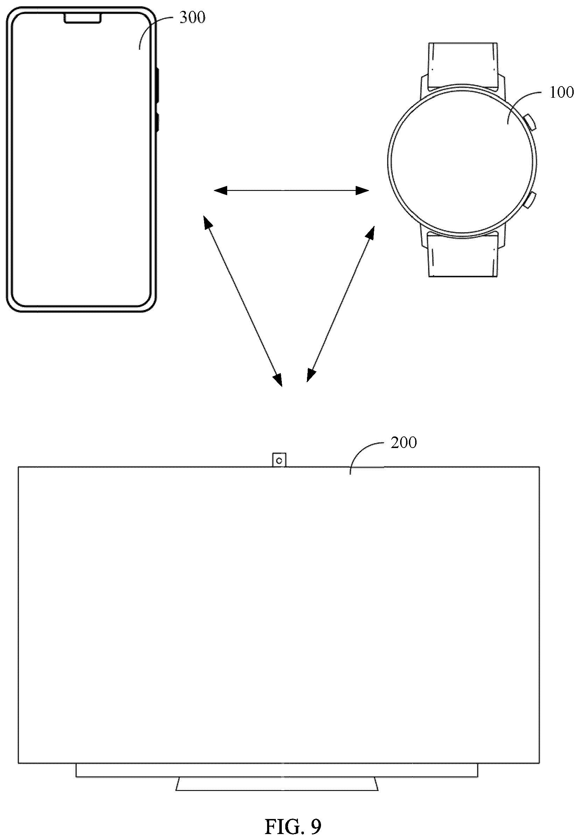

Refer to FIG. 9. An embodiment of this application provides a notification processing system 1000, including a plurality of electronic devices. FIG. 9 is described by using an example in which the notification processing system 1000 includes three electronic devices. This application is not limited to three electronic devices. The three electronic devices include the first electronic device 100, the second electronic device 200, and the third electronic device 300. It is assumed that the first electronic device 100 is a smartwatch, the second electronic device 200 is a smart screen, and the third electronic device 300 is a mobile phone.

The first electronic device 100, the second electronic device 200, and the third electronic device 300 are located in a same local area network, and the first electronic device 100, the second electronic device 200, and the third electronic device 300 may synchronously display the same notification N1. When an electronic device (assuming that the electronic device is the first electronic device 100) cancels displaying the notification N1, other electronic devices (the second electronic device 200 and the third electronic device 300) may synchronously cancel displaying the notification N1. When an electronic device (assuming that the electronic device is the first electronic device 100) opens a component corresponding to the notification N1, other electronic devices (the second electronic device 200 and the third electronic device 300) may synchronously cancel displaying the notification N1.

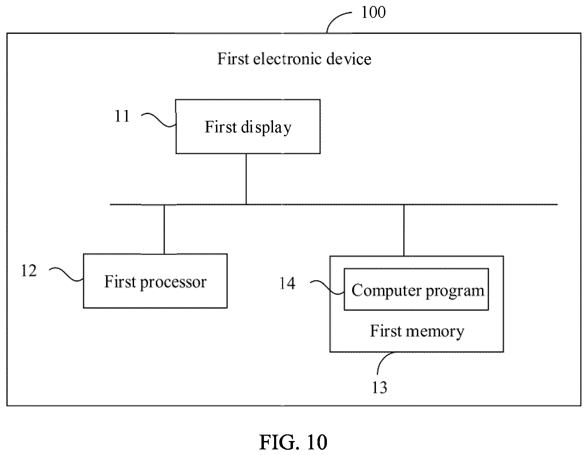

FIG. 10 is a schematic diagram of a hardware structure of the first electronic device 100 according to an embodiment of this application. As shown in FIG. 10, the first electronic device 100 may include a first display 11, a first processor 12, and a first memory 13. The first memory 13 is configured to store one or more computer programs 14. The one or more computer programs 14 are configured to be executed by the first processor 12. The one or more computer programs 14 include instructions, and the instructions may be used to implement the notification processing method shown in FIG. 7 or FIG. 8 in the first electronic device 100.

It may be understood that the structure shown in this embodiment does not constitute a specific limitation on the first electronic device 100. In some other embodiments, the first electronic device 100 may include more or fewer components than those shown in the figure, or combine some components, or split some components, or have different component arrangements.

The first processor 12 may include one or more processing units. For example, the first processor 12 may include an AP, a modem, a GPU, an ISP, a controller, a video codec, a DSP, a baseband processor, an NPU, and/or the like. Different processing units may be independent components, or may be integrated into one or more processors.

A memory may be further disposed in the first processor 12, and is configured to store instructions and data. In some embodiments, the memory in the processor 12 is a cache. The memory may store instructions or data just used or cyclically used by the first processor 12. If the first processor 12 needs to use the instructions or the data again, the first processor 12 may directly invoke the instructions or the data from the memory. This avoids repeated access, reduces waiting time of the first processor 12, and improves system efficiency.

In some embodiments, the first memory 13 may include a high-speed random access memory, and may further include a nonvolatile memory, for example, a hard disk, a memory, a plug-in hard disk, at least one magnetic disk storage device, a flash storage device, or another nonvolatile solid-state storage device.

This embodiment further provides a computer storage medium. The computer storage medium stores computer instructions, and when the computer instructions are run on an electronic device, the electronic device is enabled to perform the related method steps, to implement the notification processing method in the foregoing embodiments.

This embodiment further provides a computer program product. When the computer program product runs on a computer, the computer is enabled to perform the foregoing related steps, to implement the notification processing method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the notification processing method in the method embodiments.

The first electronic device, the computer storage medium, the computer program product, or the chip provided in embodiments are all configured to perform the corresponding method provided above. Therefore, for beneficial effects that can be achieved, refer to the beneficial effects of the corresponding method provided above. Details are not described herein again.

The foregoing descriptions about implementations allow a person skilled in the art to clearly understand that, for the purpose of convenient and brief description, division of the foregoing functional modules is used as an example for description. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed system, apparatus, and method may be implemented in other manners. For example, the described apparatus embodiment is an example. For example, division into the modules or units is logical function division. In actual implementation, another division manner may be used. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed to different places. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes: any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application.

## Claims

1. A notification processing method, applied to a first electronic device (100), wherein the first electronic device (100) displays a first notification, and the notification processing method comprises:
obtaining (71), by the first electronic device (100), notification opening information of the first notification based on an operation of opening the first notification, wherein the notification opening information comprises a device identifier and an application parameter of a first application corresponding to the first notification; and
when the first electronic device determines, based on the device identifier, that a device for opening the first notification is a second electronic device (200), transferring (72), by the first electronic device (100), the notification opening information to the second electronic device (200), so that the second electronic device starts, based on the application parameter, the first application to open the first notification, or downloads and installs the first application to open the first notification,
**characterised in that** the operation of opening the first notification comprises a first operation of a user and a second operation of the user and the notification processing method further comprises:
enabling, by the first electronic device (100), a device selection control based on the first operation; and
in response to the second operation, specifying, by the device selection control, the device identifier for opening the first notification.

2. The notification processing method according to claim 1, wherein the first electronic device (100) comprises a first data storage area, the second electronic device (200) comprises a second data storage area, the first data storage area and the second data storage area form a distributed database, and the transferring, by the first electronic device (100), the notification opening information to the second electronic device (200) comprises:
writing, by the first electronic device (100), the notification opening information into the first data storage area, so that the second electronic device (200) writes the notification opening information into the second data storage area based on a preset data synchronization policy.

3. The notification processing method according to claim 1 or 2, wherein the first electronic device (100) comprises a first distributed soft bus, the second electronic device (200) comprises a second distributed soft bus, the first data storage area and the second data storage area form the distributed database based on the first distributed soft bus and the second distributed soft bus, and the preset data synchronization policy is defined in the distributed database.

4. The notification processing method according to claim 1, wherein the notification processing method further comprises:
when the first electronic device determines, based on the device identifier, that the device for opening the first notification is the first electronic device (100), starting, by the first electronic device (100) based on the application parameter, the first application to open the first notification, or downloading and installing the first application to open the first notification.

5. The notification processing method according to claim 4, wherein the notification processing method further comprises:
transferring, by the first electronic device (100), first notification opening information to the second electronic device (200), so that the second electronic device cancels displaying the first notification.

6. The notification processing method according to claim 5, wherein the first electronic device (100) comprises a first data storage area, the second electronic device (200) comprises a second data storage area, the first data storage area and the second data storage area form a distributed database, both the first data storage area and the second data storage area store information about the first notification, and the transferring, by the first electronic device (100), first notification opening information to the second electronic device (200) comprises:
setting, by the first electronic device (100), a notification read status that is of the first notification and that is stored in the first data storage area to read, so that the second electronic device updates, based on a preset data synchronization policy, a notification read status that is of the first notification and that is stored in the second data storage area to read.

7. The notification processing method according to claim 6, wherein when the notification read status that is of the first notification and that is stored in the second data storage area is updated to read, the second data storage area returns notification read information, so that the second electronic device cancels, based on the notification read information, displaying the first notification.

8. The notification processing method according to claim 5, wherein the first electronic device (100) comprises a first data storage area, the second electronic device (200) comprises a second data storage area, the first data storage area and the second data storage area form a distributed database, both the first data storage area and the second data storage area store information about the first notification, and the transferring, by the first electronic device (100), first notification opening information to the second electronic device (200) comprises:
deleting, by the first electronic device (100), the information that is about the first notification and that is stored in the first data storage area, so that the second electronic device deletes, based on a preset data synchronization policy, the information that is about the first notification and that is stored in the second data storage area.

9. The notification processing method according to claim 8, wherein when the information about the first notification is deleted from the second data storage area, the second data storage area returns notification deletion information, so that the second electronic device cancels, based on the notification deletion information, displaying the first notification.

10. A computer-readable storage medium, comprising computer instructions, wherein when the computer instructions are run on an electronic device (10), the electronic device (10) is enabled to perform the notification processing method according to any one of claims 1 to 9.

11. An electronic device (10), wherein the electronic device (10) comprises a processor (110) and a memory (121), the memory (121) is configured to store instructions, and the processor (110) is configured to invoke the instructions in the memory (121), so that the electronic device (10) is enabled to perform the notification processing method according to any one of claims 1 to 9.

12. A chip, coupled to a memory (121) in an electronic device (10), wherein the chip is configured to control the electronic device (10) to perform the notification processing method according to any one of claims 1 to 9.

## Patentansprüche

1. Benachrichtigungsverarbeitungsverfahren, das auf eine erste elektronische Vorrichtung (100) angewandt wird, wobei die erste elektronische Vorrichtung (100) eine erste Benachrichtigung anzeigt und das Benachrichtigungsverarbeitungsverfahren Folgendes umfasst:
Erlangen (71), durch die erste elektronische Vorrichtung (100), von Benachrichtigungsöffnungsinformationen basierend auf einem Vorgang zum Öffnen der ersten Benachrichtigung, wobei die Benachrichtigungsöffnungsinformationen eine Vorrichtungskennung und einen Anwendungsparameter einer ersten Anwendung, die der ersten Benachrichtigung entspricht, umfassen; und
wenn die erste elektronische Vorrichtung basierend auf der Vorrichtungskennung bestimmt, dass eine Vorrichtung zum Öffnen der ersten Benachrichtigung eine zweite elektronische Vorrichtung (200) ist, Übertragen (72), durch die erste elektronische Vorrichtung (100), der Benachrichtigungsöffnungsinformationen an die zweite elektronische Vorrichtung (200), sodass die zweite elektronische Vorrichtung basierend auf dem Anwendungsparameter die erste Anwendung startet, um die erste Benachrichtigung zu öffnen, oder die erste Anwendung herunterlädt und installiert, um die erste Benachrichtigung zu öffnen,
**dadurch gekennzeichnet, dass** der Vorgang zum Öffnen der ersten Benachrichtigung einen ersten Vorgang eines Benutzers und einen zweiten Vorgang des Benutzers umfasst und das Benachrichtigungsverarbeitungsverfahren ferner Folgendes umfasst:
Ermöglichen, durch die erste elektronische Vorrichtung (100), einer Vorrichtungsauswahlsteuerung basierend auf dem ersten Vorgang; und
als Reaktion auf den zweiten Vorgang, Spezifizieren, durch die Vorrichtungsauswahlsteuerung, der Vorrichtungskennung zum Öffnen der ersten Benachrichtigung.

2. Benachrichtigungsverarbeitungsverfahren nach Anspruch 1, wobei die erste elektronische Vorrichtung (100) einen ersten Datenspeicherbereich umfasst, die zweite elektronische Vorrichtung (200) einen zweiten Datenspeicherbereich umfasst, der erste Datenspeicherbereich und der zweite Datenspeicherbereich eine verteilte Datenbank bilden und das Übertragen, durch die erste elektronische Vorrichtung (100), der Benachrichtigungsöffnungsinformationen an die zweite elektronische Vorrichtung (200) Folgendes umfasst:
Schreiben, durch die erste elektronische Vorrichtung (100), der Benachrichtigungsöffnungsinformationen in den ersten Datenspeicherbereich, sodass die zweite elektronische Vorrichtung (200) die Benachrichtigungsöffnungsinformationen basierend auf einer voreingestellten Datensynchronisationsrichtlinie in den zweiten Datenspeicherbereich schreibt.

3. Benachrichtigungsverarbeitungsverfahren nach Anspruch 1 oder 2, wobei die erste elektronische Vorrichtung (100) einen ersten verteilten Softbus umfasst, die zweite elektronische Vorrichtung (200) einen zweiten verteilten Softbus umfasst, der erste Datenspeicherbereich und der zweite Datenspeicherbereich die verteilte Datenbank basierend auf dem ersten verteilten Softbus und dem zweiten verteilten Softbus bilden und die voreingestellte Datensynchronisationsrichtlinie in der verteilten Datenbank definiert ist.

4. Benachrichtigungsverarbeitungsverfahren nach Anspruch 1, wobei das Benachrichtigungsverarbeitungsverfahren ferner Folgendes umfasst:
wenn die erste elektronische Vorrichtung basierend auf der Vorrichtungskennung bestimmt, dass die Vorrichtung zum Öffnen der ersten Benachrichtigung die erste elektronische Vorrichtung (100) ist, Starten, durch die erste elektronische Vorrichtung (100) basierend auf dem Anwendungsparameter, der ersten Anwendung, um die erste Benachrichtigung zu öffnen, oder Herunterladen und Installieren der ersten Anwendung, um die erste Benachrichtigung zu öffnen.

5. Benachrichtigungsverarbeitungsverfahren nach Anspruch 4, wobei das Benachrichtigungsverarbeitungsverfahren ferner Folgendes umfasst:
Übertragen, durch die erste elektronische Vorrichtung (100), erster Benachrichtigungsöffnungsinformationen an die zweite elektronische Vorrichtung (200), sodass die zweite elektronische Vorrichtung das Anzeigen der ersten Benachrichtigung abbricht.

6. Benachrichtigungsverarbeitungsverfahren nach Anspruch 5, wobei die erste elektronische Vorrichtung (100) einen ersten Datenspeicherbereich umfasst, die zweite elektronische Vorrichtung (200) einen zweiten Datenspeicherbereich umfasst, der erste Datenspeicherbereich und der zweite Datenspeicherbereich eine verteilte Datenbank bilden, sowohl der ersten Datenspeicherbereich als auch der zweite Datenspeicherbereich Informationen über die erste Benachrichtigung speichert und das Übertragen, durch die erste elektronische Vorrichtung (100), erster Benachrichtigungsöffnungsinformationen an die zweite elektronische Vorrichtung (200) Folgendes umfasst:
Einstellen, durch die erste elektronische Vorrichtung (100), eines Benachrichtigungslesestatus, welcher der ersten Benachrichtigung angehört und der in dem ersten Datenspeicherbereich gespeichert ist, um zu lesen, sodass die zweite elektronische Vorrichtung einen Benachrichtigungslesestatus, welcher der ersten Benachrichtigung angehört und der in dem zweiten Datenspeicherbereich gespeichert ist, um zu lesen, basierend auf einer voreingestellten Datensynchronisationsrichtlinie aktualisiert.

7. Benachrichtigungsverarbeitungsverfahren nach Anspruch 6, wobei, wenn der Benachrichtigungslesestatus, welcher der ersten Benachrichtigung angehört und der in dem zweiten Datenspeicherbereich gespeichert ist, aktualisiert ist, um zu lesen, der zweite Datenspeicherbereich Benachrichtigungsleseinformationen zurückmeldet, sodass die zweite elektronische Vorrichtung das Anzeigen der ersten Benachrichtigung basierend auf den Benachrichtigungsleseinformationen abbricht.

8. Benachrichtigungsverarbeitungsverfahren nach Anspruch 5, wobei die erste elektronische Vorrichtung (100) einen ersten Datenspeicherbereich umfasst, die zweite elektronische Vorrichtung (200) einen zweiten Datenspeicherbereich umfasst, der erste Datenspeicherbereich und der zweite Datenspeicherbereich eine verteilte Datenbank bilden, sowohl der erste Datenspeicherbereich als auch der zweite Datenspeicherbereich Informationen über die erste Benachrichtigung speichert und das Übertragen, durch die erste elektronische Vorrichtung (100), erster Benachrichtigungsöffnungsinformationen an die zweite elektronische Vorrichtung (200) Folgendes umfasst:
Löschen, durch die erste elektronische Vorrichtung (100), der Informationen, die von der ersten Benachrichtigung handeln und die in dem ersten Datenspeicherbereich gespeichert sind, sodass die zweite elektronische Vorrichtung die Informationen, die von der ersten Benachrichtigung handeln und die in dem zweiten Datenspeicherbereich gespeichert sind, basierend auf einer voreingestellten Datensynchronisationsrichtlinie löscht.

9. Benachrichtigungsverarbeitungsverfahren nach Anspruch 8, wobei, wenn die Informationen über die erste Benachrichtigung aus dem zweiten Datenspeicherbereich gelöscht sind, der zweite Datenspeicherbereich Benachrichtigungslöschungsinformationen zurückmeldet, sodass die zweite elektronische Vorrichtung das Anzeigen der ersten Benachrichtigung basierend auf den Benachrichtigungslöschungsinformationen abbricht.

10. Computerlesbares Speichermedium, umfassend Computeranweisungen, wobei, wenn die Computeranweisungen auf einer elektronischen Vorrichtung (10) ausgeführt werden, es der elektronischen Vorrichtung (10) ermöglicht wird, das Benachrichtigungsverarbeitungsverfahren nach einem der Ansprüche 1 bis 9 durchzuführen.

11. Elektronische Vorrichtung (10), wobei die elektronische Vorrichtung (10) einen Prozessor (110) und einen Speicher (121) umfasst, der Speicher (121) dazu konfiguriert ist, Anweisungen zu speichern, und der Prozessor (110) dazu konfiguriert ist, die Anweisungen in dem Speicher (121) aufzurufen, sodass es der elektronischen Vorrichtung (10) ermöglicht wird, das Benachrichtigungsverarbeitungsverfahren nach einem der Ansprüche 1 bis 9 durchzuführen.

12. Chip, der mit einem Speicher (121) in einer elektronischen Vorrichtung (10) gekoppelt ist, wobei der Chip dazu konfiguriert ist, die elektronische Vorrichtung (10) zu steuern, um das Benachrichtigungsverarbeitungsverfahren nach einem der Ansprüche 1 bis 9 durchzuführen.

## Revendications

1. Procédé de traitement de notification, appliqué à un premier dispositif électronique (100), dans lequel le premier dispositif électronique (100) affiche une première notification, et le procédé de traitement de notification comprend :
l'obtention (71), par le premier dispositif électronique (100), des informations d'ouverture de notification de la première notification sur la base d'une opération d'ouverture de la première notification, dans lequel les informations d'ouverture de notification comprennent un identifiant de dispositif et un paramètre d'application d'une première application correspondant à la première notification ; et
lorsque le premier dispositif électronique détermine, sur la base de l'identifiant de dispositif, qu'un dispositif destiné à ouvrir la première notification est un second dispositif électronique (200), le transfert (72), par le premier dispositif électronique (100), des informations d'ouverture de notification au second dispositif électronique (200), de sorte que le second dispositif électronique démarre, sur la base du paramètre d'application, la première application pour ouvrir la première notification, ou télécharge et installe la première application pour ouvrir la première notification,
**caractérisé en ce que** l'opération d'ouverture de la première notification comprend une première opération d'un utilisateur et une seconde opération de l'utilisateur, et le procédé de traitement de notification comprend également :
l'activation, par le premier dispositif électronique (100), d'une commande de sélection de dispositif sur la base de la première opération ; et
en réponse à la seconde opération, la spécification, par la commande de sélection de dispositif, de l'identifiant du dispositif pour ouvrir la première notification.

2. Procédé de traitement de notification selon la revendication 1, dans lequel le premier dispositif électronique (100) comprend une première zone de stockage de données, le second dispositif électronique (200) comprend une seconde zone de stockage de données, les première et seconde zones de stockage de données forment une base de données distribuée, et le transfert, par le premier dispositif électronique (100), des informations d'ouverture de notification au second dispositif électronique (200) comprend :
l'écriture, par le premier dispositif électronique (100), des informations d'ouverture de notification dans la première zone de stockage de données, de sorte que le second dispositif électronique (200) écrit les informations d'ouverture de notification dans la seconde zone de stockage de données sur la base d'une politique de synchronisation de données prédéfinie.

3. Procédé de traitement de notification selon la revendication 1 ou 2, dans lequel le premier dispositif électronique (100) comprend un premier bus logiciel distribué, le second dispositif électronique (200) comprend un second bus logiciel distribué, la première zone de stockage de données et la seconde zone de stockage de données forment la base de données distribuée sur la base du premier bus logiciel distribué et du second bus logiciel distribué, et la politique de synchronisation de données prédéfinie est définie dans la base de données distribuée.

4. Procédé de traitement de notification selon la revendication 1, dans lequel le procédé de traitement de notification comprend également :
lorsque le premier dispositif électronique détermine, sur la base de l'identifiant de dispositif, que le dispositif destiné à ouvrir la première notification est le premier dispositif électronique (100), le démarrage, par le premier dispositif électronique (100) sur la base du paramètre d'application, de la première application pour ouvrir la première notification, ou le téléchargement et l'installation de la première application pour ouvrir la première notification.

5. Procédé de traitement de notification selon la revendication 4, dans lequel le procédé de traitement de notification comprend également :
le transfert, par le premier dispositif électronique (100), de premières informations d'ouverture au second dispositif électronique (200), de sorte que le second dispositif électronique annule l'affichage de la première notification.

6. Procédé de traitement de notification selon la revendication 5, dans lequel le premier dispositif électronique (100) comprend une première zone de stockage de données, le second dispositif électronique (200) comprend une seconde zone de stockage de données, les première et seconde zones de stockage de données forment une base de données distribuée, les première et seconde zones de stockage de données stockent des informations sur la première notification, et le transfert, par le premier dispositif électronique (100), de premières informations d'ouverture de notification au second dispositif électronique (200) comprend :
le réglage, par le premier dispositif électronique (100), d'un statut de lecture de notification de la première notification qui est stocké dans la première zone de stockage de données comme lu, de sorte que le second dispositif électronique met à jour, sur la base d'une politique de synchronisation de données prédéfinie, un statut de lecture de notification de la première notification qui est stocké dans la seconde zone de stockage de données comme lu.

7. Procédé de traitement de notification selon la revendication 6, dans lequel lorsque l'état de lecture de notification de la première notification stocké dans la seconde zone de stockage de données est mis à jour à comme lu, la seconde zone de stockage de données renvoie des informations de lecture de notification, de sorte que le second dispositif électronique annule, sur la base des informations de lecture de notification, l'affichage de la première notification.

8. Procédé de traitement de notification selon la revendication 5, dans lequel le premier dispositif électronique (100) comprend une première zone de stockage de données, le second dispositif électronique (200) comprend une seconde zone de stockage de données, les première et seconde zones de stockage de données forment une base de données distribuée, les première et seconde zones de stockage de données stockent des informations sur la première notification, et le transfert, par le premier dispositif électronique (100), de premières informations d'ouverture de notification au second dispositif électronique (200) comprend :
la suppression, par le premier dispositif électronique (100), des informations relatives à la première notification qui sont stockées dans la première zone de stockage de données, de sorte que le second dispositif électronique supprime, sur la base d'une politique de synchronisation de données prédéfinie, les informations relatives à la première notification qui sont stockées dans la seconde zone de stockage de données.

9. Procédé de traitement de notification selon la revendication 8, dans lequel, lorsque les informations relatives à la première notification sont supprimées de la seconde zone de stockage de données, la seconde zone de stockage de données renvoie des informations de suppression de notification, de sorte que le second dispositif électronique annule, sur la base des informations de suppression de notification, l'affichage de la première notification.

10. Support de stockage lisible par ordinateur, comprenant des instructions informatiques, dans lequel, lorsque les instructions informatiques sont mises en œuvre sur un dispositif électronique (10), le dispositif électronique (10) est activé pour réaliser le procédé de traitement de notification selon l'une quelconque des revendications 1 à 9.

11. Dispositif électronique (10), dans lequel le dispositif électronique (10) comprend un processeur (110) et une mémoire (121), la mémoire (121) est configurée pour stocker des instructions, et le processeur (110) est configuré pour invoquer les instructions dans la mémoire (121), de sorte que le dispositif électronique (10) est activé pour réaliser le procédé de traitement de notification selon l'une quelconque des revendications 1 à 9.

12. Puce, couplée à une mémoire (121) dans un dispositif électronique (10), dans laquelle la puce est configurée pour commander le dispositif électronique (10) afin d'effectuer le procédé de traitement de notification selon l'une quelconque des revendications 1 à 9.
